# EUROPÄISCHE PATENTSCHRIFT

(11) **EP 3 385 177 B1**
(45) Veröffentlichungstag und Bekanntmachung des Hinweises auf die Patenterteilung: **18.12.2019**
(21) Anmeldenummer: 18164594.6
(22) Anmeldetag: 28.03.2018
(51) Int. Cl.: B65B 59/04, B65B 9/04, B29C 65/00, B65B 65/02

(54) **VERPACKUNGSMASCHINE MIT NEIGBARER WERKZEUGSCHUBLADE**
PACKAGING MACHINE WITH TILTABLE TOOL DRAWER
MACHINE D'EMBALLAGE COMPRENANT UN TIROIR À OUTILS INCLINABLE

(30) Priorität: 04.04.2017 DE 102017107243
(43) Veröffentlichungstag der Anmeldung: 10.10.2018
(73) Patentinhaber: MULTIVAC Sepp Haggenmüller SE & Co. KG, 87787 Wolfertschwenden (DE)
(72) Erfinder: KOVACS, Peter, 87700 Memmingen (DE); WEIß, Klaus, 87730 Bad Grönenbach (DE)
(74) Vertreter: Grünecker Patent- und Rechtsanwälte PartG mbB

(56) Entgegenhaltungen:
- EP-A1- 2 384 980
- EP-A1- 2 522 580
- EP-A1- 2 769 923
- EP-A2- 2 982 487

## Beschreibung

Die vorliegende Erfindung bezieht sich auf eine Verpackungsmaschine gemäß dem Oberbegriff des Anspruchs 1.

Die US 7,340,871 B1 offenbart eine gattungsgemäße Verpackungsmaschine, bei welcher für einen Werkzeugwechselvorgang ein Werkzeugunterteil aus einer horizontalen Ausrichtung heraus seitwärts weiter in horizontaler Ausrichtung auf einem Schienensystem aus dem Maschinengestell der Verpackungsmaschine herausgezogen werden kann. Dafür ist das Schienensystem derart seitlich am Maschinengestell fixiert, dass sich das Werkzeugunterteil darauf wie eine Schublade unterhalb des Maschinenrahmens hindurch seitwärts herausziehen lasst. Die US 7,340,871 B1 setzt dafür allerdings voraus, dass das herausziehbare Werkzeugunterteil von einem Hubwerk mit einer großen Hubweite getragen wird, damit das Werkzeugunterteil ausreichend tief im Maschinengestell auf ein sehr niedriges Niveau herabsenkt werden kann. Nur dann kann das Werkzeugunterteil aus seiner tiefen Lage heraus seitwärts in horizontaler Ausrichtung zur Bedienerseite hin herausgezogen werden, ohne dass es dabei mit einer Kettenführung, einem Seitenrahmenprofil oder anderen seitlich am Maschinenrahmen angebrachten Anbauteilen kollidiert. Ein derart weit öffnendes Hubwerk ist allerdings nicht an jeder Verpackungsmaschine verfügbar und ist insbesondere aus Gründen der Leistungsreduzierung wegen eines unnötigen Mehrhubs an manchen Verpackungsmaschinentypen unerwünscht.

EP 2 522 580 A1 offenbart eine Arbeitsstation einer Verpackungsmaschine, wobei die an einem Werkzeugoberteil befestigte Siegelplatte mittels einer Horizontalwechsel- oder Kippwechseleinrichtung oberhalb einer durch die Arbeitsstation geführten Kettenführung auswechselbar ist.

Die EP 2 769 923 A1 offenbart eine Siegelstation einer Tiefziehverpackungsmaschine, wobei ein daran vorgesehenes Siegelwerkzeugunterteil, eine daran befestigte Siegelbrille sowie eine auf der Siegelbrille abgelegte Siegelplatte im Verbund mittels einer Hubeinrichtung in eine untere Wechselposition gebracht werden können. Aus der unteren Wechselposition heraus lassen sich die im Verbund übereinandergestapelten Komponenten zusammen seitlich horizontal über am Maschinengestell befestigte schienenförmige Arme herausziehen.

Die EP 2 384 980 A1 zeigt ein schwenkbar an einer Arbeitsstation einer Verpackungsmaschine gelagertes Formwerkzeugoberteil.

Die EP 2 982 487 A2 offenbart eine Vorrichtung zum Wechsel des Ober- und Unterwerkzeugs einer Verpackungsmaschine.

Davon ausgehend liegt der Erfindung die Aufgabe zugrunde, eine Verpackungsmaschine hinsichtlich eines Werkzeugwechselvorgangs zu verbessern und insbesondere dafür eine technische Lösung bereitzustellen, die sich an unterschiedlichen Verpackungsmaschinentypen kostengünstig verwirklichen lässt.

Diese Aufgabe wird gelost durch eine Verpackungsmaschine gemäß dem Anspruch 1. Vorteilhafte Ausführungen der Erfindung sind in den abhängigen Ansprüchen angegeben.

Die Erfindung schlagt eine Verpackungsmaschine zum Herstellen von Produkten entlang einer Produktionsrichtung vor, wobei die Verpackungsmaschine insbesondere als Tiefziehverpackungsmaschine ausgebildet ist. Die erfindungsgemäße Verpackungsmaschine umfasst ein Maschinengestell und mindestens eine Arbeitsstation, insbesondere eine Siegelstation und/oder eine Formstation, mit einem Hubwerk zum Tragen und Bewegen eines Werkzeugunterteils zwischen einer offenen und einer geschlossenen Position, wobei das Werkzeugunterteil in der geschlossenen Position für einen Arbeitsvorgang an ein darüber angeordnetes Werkzeugoberteil herangeführt und in der offenen Position von dem Werkzeugoberteil beabstandet ist.

Erfindungsgemäß ist für einen Werkzeugwechselvorgang ein Kippmechanismus vorgesehen, der dazu konfiguriert ist, das Werkzeugunterteil aus seiner in der offenen Position eingenommenen, typischerweise horizontalen Ausrichtung heraus in eine Kipplage zu bringen. In der Kipplage ist das Werkzeugunterteil relativ zu einer horizontalen Bezugsebene geneigt angeordnet. Dabei kann der Kippmechanismus das Werkzeugunterteil für den Werkzeugwechselvorgang derart ausrichten, dass es, ohne mit seitlich fixierten Rahmenteilen zu kollidieren, hervorragend aus der Verpackungsmaschine ausbaubar ist. Insbesondere ist dafür ein Hubwerk mit einer im Vergleich zum Stand der Technik reduzierten Hubweite verwendbar, wodurch die Leistung des Hubwerks und damit auch die gesamte Leistung der Verpackungsmaschine effektiver sind.

Die Erfindung wendet sich somit vom herkömmlichen Bestreben ab, das Werkzeugunterteil ausschließlich in einer horizontalen Ausrichtung für einen Werkzeugwechsel der Verpackungsmaschine zu entnehmen.

Vorzugsweise definieren die Kipplage des Werkzeugunterteils eine Richtung für den Werkzeugwechselvorgang und eine Hubstrecke des Hubwerks eine Richtung zum Heben und Senken des Werkzeugunterteils, wobei die jeweiligen Richtungen zusammen in einer vertikalen Projektionsebene betrachtet, bezüglich welcher die Produktionsrichtung orthogonal ausgerichtet ist, einen spitzen Winkel einschließen. Dadurch kann das Werkzeugunterteil zum Boden hin gekippt werden und seitwärts entlang der Richtung der Kipplage aus der Verpackungsmaschine herausgezogen werden.

Vorzugsweise ist der Kippmechanismus integral am Hubwerk der Arbeitsstation ausgebildet. Dadurch ergibt sich eine besonders robuste und kompakte Konstruktion, die insbesondere für einen dauerhaften Betrieb ausgelegt ist. Ein derartiges Hubwerk mit daran integral verbautem Kippmechanismus ist an verschiedenen Verpackungsmaschinentypen einsetzbar.

Bevorzugt ist der Kippmechanismus dazu ausgebildet, das Werkzeugunterteil innerhalb des Maschinengestells in die Kipplage zu bringen. Dadurch kann ein Kraftfluss, insbesondere während des Kippvorgangs, einwandfrei vom Maschinengestell der Verpackungsmaschine aufgenommen werden. Vorzugsweise befindet sich das Werkzeugunterteil in seiner Kipplage in vertikaler Projektionsebene betrachtet unterhalb des Werkzeugoberteils. Für diese Variante wird insgesamt wenig Raum benötigt, sodass eine kompakte Ausführung möglich ist.

Gemäß einer Ausführungsvariante ist vorgesehen, dass in der Kipplage eine zu einem Seitenrahmen des Maschinengestells hingewandte Seite des Werkzeugunterteils ein niedrigeres Niveau einnimmt als eine gegenüberliegende, zu dem Seitenrahmen abgewandte Seite des Werkzeugunterteils. Dadurch kann das Werkzeugunterteil auf der zum Bediener hingewandten Seite herabgesenkt werden, sodass es eine Ausrichtung einnimmt, aus welcher es leicht schräggestellt aus der Verpackungsmaschine herausgezogen werden kann. Dabei kann die mittels der Kipplage erzeugte Abtriebskraft auf das Werkzeugunterteil den Werkzeugwechselvorgang sogar begünstigen.

Vorzugsweise ist der Kippmechanismus zwischen einer ersten und einer zweiten Stellung einstellbar, wobei in der ersten Stellung des Kippmechanismus das Werkzeugunterteil für einen Produktionsbetrieb horizontal ausgerichtet ist, und wobei in der zweiten Stellung des Kippmechanismus das Werkzeugunterteil für den Werkzeugwechselvorgang aus der horizontalen Ausrichtung heraus um einen Kippwinkel zu einer Seite des Maschinengestells hin geneigt in der Kipplage gelagert ist. Der Kippmechanismus ist somit in funktionaler Hinsicht sowohl für den Produktionsbetrieb als auch für den Werkzeugwechselvorgang ausgelegt.

Insbesondere weist der Kippmechanismus eine Kippeinheit mit einer Hubschiene auf, die um eine entlang der Produktionsrichtung verlaufende Kippachse schwenkbar gelagert ist. Die Hubschiene steht für einen Produktionsbetrieb unter hohem Krafteinfluss sowie für einen stabilen Werkzeugwechselvorgang zur Verfügung und lässt sich darüber hinaus problemlos an unterschiedlichen Verpackungsmaschinentypen, insbesondere an unterschiedlichen Tiefziehverpackungsmaschinen, einfach integrieren.

Eine vorteilhafte Variante sieht vor, dass der Kippmechanismus eine Schwenkeinheit mit einer als Schwenklager konfigurierten Hubschiene umfasst, wobei das Schwenklager eine entlang der Produktionsrichtung verlaufende Schwenkachse definiert, um welche das Werkzeugunterteil in die Kipplage schwenkbar ist. Die Schwenkeinheit ist vorzugsweise der Kippeinheit gegenüberliegend, innerhalb des Maschinengestells angeordnet. Sowohl die Schwenkeinheit als auch die Kippeinheit sind für einen Produktionsbetrieb unter hohem Krafteinfluss ausgebildet.

Vorzugsweise weist der Kippmechanismus eine zur lösbaren Befestigung des Werkzeugunterteils ausgebildete Grundplatte auf, die mittels des Kippmechanismus schwenkbar gelagert ist. Die Grundplatte bietet für das Werkzeugunterteil ein stabiles Auflager und verleiht insbesondere auch dem Kippmechanismus eine hohe Stabilität. Die Grundplatte bildet in der Kipplage des Werkzeugunterteils eine schiefe Ebene mit einem Gefälle, entlang dessen das Werkzeugunterteil hin zur Bedienerseite der Verpackungsmaschine heraustransportiert werden kann.

Weiter vorteilhaft ist, wenn die Verpackungsmaschine, vornehmlich der Kippmechanismus, mindestens einen Sensor zum Erfassen einer durch das Werkzeugunterteil am Kippmechanismus eingenommenen Endlage umfasst. Dadurch kann mittels einer Sicherheitsabfrage festgestellt werden, ob das Werkzeugunterteil ordnungsgemäß für den Produktionsbetrieb am Kippmechanismus angeordnet ist. Wird dies verneint, wird ein Betrieb der Verpackungsmaschine nicht möglich sein.

Eine Variante der Erfindung sieht vor, dass der Kippmechanismus mindestens einen Sensor zum Erfassen einer vom Kippmechanismus eingenommenen Raststellung umfasst, in welcher das Werkzeugunterteil horizontal ausgerichtet ist. Dadurch kann mittels einer Sicherheitsabfrage festgestellt werden, ob das Werkzeugunterteil für den Produktionsbetrieb richtig ausgerichtet ist. Durch diese Sicherheitsabfrage kann auch gewährleistet werden, dass der Kippmechanismus derart stabil für den Produktionsbetrieb angeordnet ist, dass er während des Produktionsbetriebs große Kräfte aufnehmen kann.

Für einen flexiblen Einsatz, insbesondere zur Verwendung unterschiedlicher Werkzeugunterteile, kann der Kippmechanismus höhenverstellbar ausgebildet sein. Vorstellbar wäre es, dass sich der Kippmechanismus mittels wahlweise einbaubarer Unterlagen aufbocken lässt, wodurch er insgesamt ein höheres Niveau während des Betriebs der Verpackungsmaschine einnehmen kann.

Vorzugsweise umfasst das Maschinengestell eine Aufnahme zur lösbaren Befestigung einer Schieneneinrichtung für den Werkzeugwechselvorgang, um darauf das Werkzeugunterteil aus dem Maschinengestell herauszuziehen. Auf der Schieneneinrichtung kann das Werkzeugunterteil in eine Position seitlich der Verpackungsmaschine gebracht werden, von welcher aus eine weitere Handhabe besonders ergonomisch durchführbar ist.

Vorzugsweise fluchtet die Schieneneinrichtung mit der in der Kipplage eingenommenen, geneigten Ausrichtung des Kippmechanismus. Somit kann die Schieneneinrichtung zusammen mit dem Kippmechanismus eine ausreichend lange schiefe Ebene bilden, worauf das Werkzeugunterteil aus der Verpackungsmaschine heraus beziehungsweise in diese hinein geschoben werden kann.

Für einen besonders einfachen und schnell durchführbaren Werkzeugwechselvorgang ist der Kippmechanismus vorzugsweise von einer Bedienerseite der Verpackungsmaschine aus bedienbar. Bevorzugt ist eine manuelle Bedienbarkeit des Kippmechanismus.

Die Erfindung wird anhand eines Ausführungsbeispiels gemäß den folgenden Figuren näher erläutert. Im Einzelnen zeigen:
- Fig. 1: eine schematische Seitenansicht einer als Tiefziehverpackungsmaschine ausgebildeten Verpackungsmaschine,
- Fig. 2: eine schematische Darstellung des Hubwerkapparats in Produktionsrichtung betrachtet mit einem daran angeordneten Werkzeugunterteil in einer geschlossenen Arbeitsposition,
- Fig. 3: der Hubwerkapparat aus Figur 2 mit dem Werkzeugunterteil in einer offenen Arbeitsposition,
- Fig. 4: der Hubwerkapparat mit dem Werkzeugunterteil in einer Kipplage für einen Werkzeugwechselvorgang ,
- Fig. 5: das Werkzeugunterteil aus der gekippten Position gemäß Figur 4 seitlich herausgezogen auf eine Schieneneinrichtung,
- Fig. 6a: Der Kippmechanismus in einer Raststellung zur horizontalen Ausrichtung des Werkzeugunterteils,
- Fig. 6b: der Kippmechanismus beim Verlassen seiner Raststellung gemäß Figur 6a,
- Fig. 6c: Der Kippmechanismus in einer Stellung zur Durchführung des Werkzeugwechselvorgangs und
- Fig. 7: eine schematische Darstellung einer Hubschienenanordnung des Kippmechanismus.

Gleiche Komponenten sind in den Figuren durchgehend mit gleichen Bezugszeichen versehen.

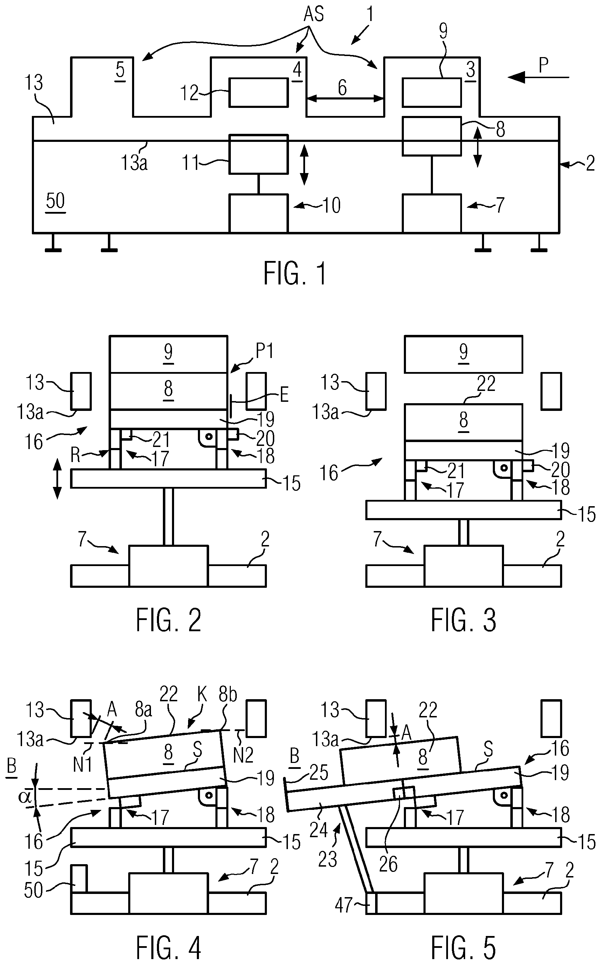

Figur 1 zeigt in schematischer Seitenansicht eine Verpackungsmaschine 1 zum Herstellen von Produkten entlang einer Produktionsrichtung P. Die Verpackungsmaschine 1 besitzt ein Maschinengestell 2 sowie mehrere Arbeitsstationen AS. In Produktionsrichtung P betrachtet werden die Arbeitsstationen AS durch eine Formstation 3, eine Siegelstation 4 und eine Schneidstation 5 gebildet. Die Formstation 3 formt Mulden in eine nicht näher dargestellte Unterfolie. Entlang einer Einlegestrecke 6 werden die Mulden der Unterfolie mit Produkten befüllt. An der Siegelstation 4 wird eine nicht näher dargestellte Deckelfolie auf die Unterfolie gesiegelt, nachdem das Muldeninnere evakuiert und/oder begast wurde, um die Haltbarkeit beispielsweise bei Lebensmitteln zu erhöhen. Die aus dem Folienverbund der Unter- und Deckelfolie ausgebildeten Verpackungen werden an der Schneidstation 5 vereinzelt und aus der Verpackungsmaschine 1 maschinell heraustransportiert.

Für den Formvorgang an der Formstation 3 umfasst die Verpackungsmaschine 1 ein Hubwerk 7 zum Tragen und Bewegen eines Werkzeugunterteils 8 relativ zu einem Werkzeugoberteil 9, das darüber angeordnet ist. Die in Produktionsrichtung P betrachtet der Formstation 3 nachgeordnete Siegelstation 4 umfasst ein Hubwerk 10 zum Tragen und Bewegen eines Werkzeugunterteils 11 relativ zu einem darüber angeordneten Werkzeugoberteil 12. Bei der Formstation 3 sind das Werkzeugunterteil 8 als Formwerkzeugunterteil und das Werkzeugoberteil 9 als Formwerkzeugoberteil zum Herstellen der Mulden ausgebildet. Bei der Siegelstation 4 sind das Werkzeugunterteil 11 als Siegelwerkzeugunterteil und das Werkzeugoberteil 12 als Siegelwerkzeugoberteil für den Siegelvorgang ausgebildet.

Weiter zeigt Figur 1 eine untere Seitenrahmenkante 13a. Gemäß Figur 1 erstreckt sich die untere Seitenrahmenkante 13a entlang der gesamten Verpackungsmaschine 1 und ist beispielsweise durch ein Rahmenprofil 13 der Verpackungsmaschine 1 definiert. Das Rahmenprofil 13 ist an einem Seitenrahmen 50 der Verpackungsmaschine befestigt. Für einen Werkzeugwechselvorgang können die jeweiligen Werkzeugunterteile 8, 11 unterhalb der Seitenrahmenkante 13a aus der Verpackungsmaschine 1 herausgezogen werden. Das erfinderische Prinzip dafür wird im Folgenden anhand der Formstation 3 der Verpackungsmaschine 1 beschrieben.

Figur 2 zeigt das Hubwerk 7 der Formstation 3 in einer ausgefahrenen Stellung, in welcher das Werkzeugunterteil 8 in eine geschlossene Position P1 gebracht ist. In der geschlossenen Position P1 ist das Werkzeugunterteil 8 für einen Formvorgang an das darüber angeordnete Werkzeugoberteil 9 herangeführt. Gemäß Figur 2 ist das Werkzeugunterteil 8 in der geschlossenen Position P1 auf einem vergleichbaren Höhenniveau positioniert wie das Rahmenprofil 13.

Gemäß Figur 2 umfasst das Hubwerk 7 eine höhenverstellbar gelagerte Basis 15, die beispielsweise als Rahmen oder als Platte ausgebildet sein kann. Gemäß Figur 2 ist auf dem Hubwerk 7, insbesondere auf der dazugehörigen Basis 15, ein Kippmechanismus 16 angeordnet. Der Kippmechanismus 16 wird mittels des Hubwerks 7 während des Produktionsbetriebs auf und ab bewegt. Im Wesentlichen umfasst der Kippmechanismus 16 eine Kippeinheit 17, eine Schwenkeinheit 18 sowie eine darauf schwenkbar gekoppelte Grundplatte 19. Auf der Grundplatte 19 ist das Werkzeugunterteil 8 lösbar angeordnet.

Des Weiteren zeigt Figur 2, dass am Kippmechanismus 16 ein Sensor 20 vorgesehen ist, der zum Erfassen einer durch das Werkzeugunterteil 8 am Kippmechanismus 16 eingenommenen Endlage E ausgebildet ist. Außerdem zeigt Figur 2, dass am Kippmechanismus 16 ein weiterer Sensor 21 angeordnet ist, der zum Erfassen einer vom Kippmechanismus 16 eingenommenen Raststellung R ausgebildet ist, in welcher das Werkzeugunterteil 8 horizontal ausgerichtet ist.

Figur 3 zeigt das Hubwerk 7 der Formstation 3 in einer eingefahrenen Stellung, in welcher das Werkzeugunterteil 8 eine offene Position P2 einnimmt. In der offenen Position P2 ist das Werkzeugunterteil 8 von dem darüber angeordneten Werkzeugoberteil 9 beabstandet gelagert. Gemäß Figur 3 ist das Werkzeugunterteil 8 immer noch wie in Figur 2 horizontal, jedoch auf einem niedrigeren Höhenniveau über dem Hubwerk 7 angeordnet. Obwohl in Figur 3 das Werkzeugunterteil 8 auf einem niedrigeren Höhenniveau als in Figur 2 angeordnet ist, lässt sich das Werkzeugunterteil 8 nicht horizontal seitwärts über die Grundplatte 19 aus dem Maschinengestell 2 herausziehen, weil es dabei mit dem Rahmenprofil 13 der Verpackungsmaschine 1 kollidieren würde. Das Werkzeugunterteil 8 ließe sich nur dann in seiner horizontalen Ausrichtung seitwärts unterhalb des Rahmenprofils 13 herausziehen, wenn eine durch das Werkzeugunterteil 8 definierte Werkzeuguntereiloberkante 22 auf einem niedrigeren Höhenniveau positioniert wäre als die untere Seitenrahmenkante 13a. Dies ist gemäß Figur 3 jedoch nicht der Fall. Folglich müsste das Hubwerk 7 aus der in Figur 3 gezeigten Stellung, in welcher das Werkzeugunterteil 8 in der offenen Position P2 angeordnet ist, weiter geöffnet werden, d. h. die Basis 15 müsste über die in Figur 3 gezeigte Stellung hinaus weiter nach unten verfahren. Dies würde allerdings eine besonders große Hubweite des Hubwerks 7 erfordern.

Die Figur 4 zeigt eine Lösung, wie die oben geschilderte Problematik anhand des Kippmechanismus 16 raffiniert umgangen werden kann.

Gemäß Figur 4 hat der Kippmechanismus 16 das Werkzeugunterteil 8 in eine Kipplage K versetzt. In der Kipplage K ist das Werkzeugunterteil 8 aus seiner in der offenen Position P2 gemäß Figur 3 eingenommen horizontalen Ausrichtung hin zu dem Seitenrahmen 50 des Maschinengestells 2 geneigt ausgerichtet. Dabei nimmt eine zu dem Seitenrahmen 50 des Maschinengestells 2 hingewandte Seite 8a des Werkzeugunterteils 8 ein Niveau N1 ein, welches niedriger ist als ein Niveau N2 einer gegenüberliegenden, von dem Seitenrahmen 50 abgewandten Seite 8b des Werkzeugunterteils 8.

Gemäß Figur 4 ist die Grundplatte 19 einschließlich des darauf angeordneten Werkzeugunterteils 8 um einen Kippwinkel α relativ zur Horizontalen seitwärts zu einer Bedienerseite B hin abfallend geneigt angeordnet. Die Grundplatte 19 bildet dabei eine schiefe Ebene S aus, deren Gefälle zur Bedienerseite B hin abwärts geneigt ist. Entlang der schiefen Ebene S kann das Werkzeugunterteil 8 problemlos seitlich zur Bedienerseite B hin aus dem Maschinengestell 2 der Verpackungsmaschine 1 herausgezogen werden. Dabei kommt es nicht zu einer Kollision des Werkzeugunterteils 8 mit dem Rahmenprofil 14, weil die Werkzeugunterteiloberkante 22 unterhalb der Seitenrahmenkante 13 mit einem genügend großen Abstand A vorbeigezogen werden kann. Dies zeigt auch Figur 5.

Gemäß Figur 5 wird das Werkzeugunterteil 8 von der Grundplatte 19 des Kippmechanismus 16 herab auf eine Schieneneinrichtung 23 gezogen. Die Schieneneinrichtung 23 ist seitlich lösbar am Maschinengestell 2 der Verpackungsmaschine 1 in einer Aufnahme 47 befestigt. Die Schieneneinrichtung 23 umfasst mindestens eine Schiene 24, auf welcher das Werkzeugunterteil 8 bis zu einem Anschlag 25 herausziehbar ist. Dort kann das Werkzeugunterteil 8 gewartet und/oder gereinigt werden oder steht für einen Werkzeugwechsel zur Verfügung. Gemäß Figur 5 bildet die Schiene 24 der Schieneneinrichtung 23 eine Verlängerung der Grundplatte 19, insbesondere eine Verlängerung der durch die Grundplatte 19 gebildeten schiefen Ebene S, worauf das Werkzeugunterteil 8 sowohl aus dem Maschinengestell 2 herausgezogen als auch in die in Figur 4 gezeigte Position geschoben werden kann.

Figur 5 zeigt ein Koppelglied 26, das dazu ausgebildet ist, für den Werkzeugwechselvorgang die Schiene 24 an der Grundplatte 19 des Kippmechanismus 16 zu befestigen und beide miteinander entlang der schiefen Ebene S auszurichten.

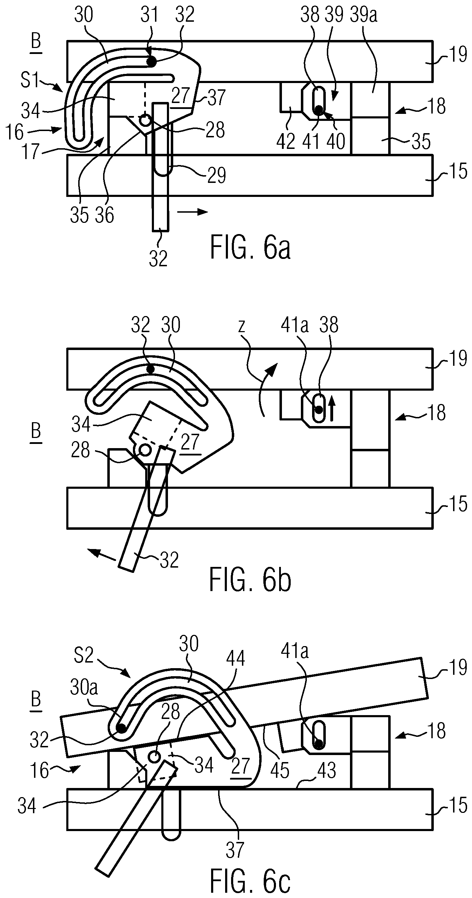

Figur 6a zeigt den Kippmechanismus 16 in vergrößerter Darstellung. Die Kippeinheit 17 des Kippmechanismus 16 umfasst ein Kippteil 27, das um eine Kippachse 28, die in Produktionsrichtung P ausgerichtet ist und sich gemäß Figur 6a in die Bildebene hinein erstreckt, schwenkbar gelagert ist. Die Kippeinheit 17 umfasst einen Befestigungsvorsprung 29, der auf der Basis 15 des Hubwerks 7 befestigt ist. Ferner ist an dem Kippteil 27 eine bogenförmige Führung 30 ausgebildet. Die bogenförmige Führung 30 nimmt einen von der Grundplatte 19 abstehenden Vorsprung 31 auf. Der Vorsprung 31 kann beispielsweise als zylindrischer Bolzen 32 ausgebildet sein, der entlang der Führung 30 verschiebbar ist. Am Kippteil 27 ist ferner ein Griff 32 befestigt, der eine manuelle Betätigung des Kippmechanismus 16 ermöglicht.

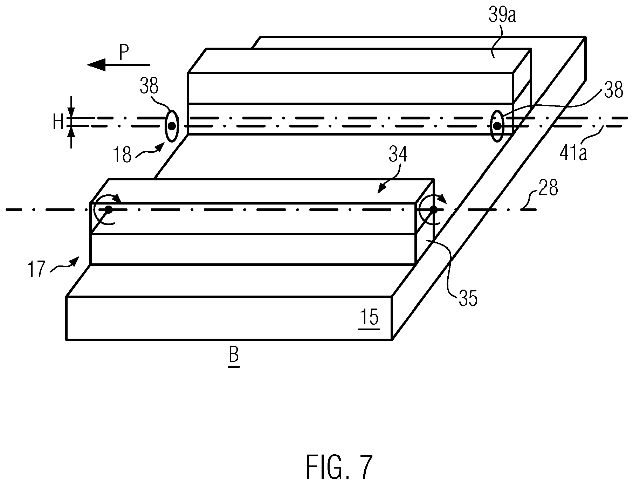

Der Kippteil 27 ist mit einem Ende einer Hubschiene 34 verbunden, die sich in die Bildebene der Figur 6a hinein erstreckt (siehe auch Figur 7). Die Hubschiene 34 sitzt auf einer auswechselbaren Unterlage 35 auf. Die Unterlage 35 verfügt über eine Schräge 36, damit die Hubschiene 34 einwärts schwenkbar ist. Schließlich zeigt Figur 6a eine Stützkante 37, die am Kippteil 27 ausgebildet ist. Die Stützkante 37 kann, wie später im Zusammenhang mit Figur 6c beschrieben wird, auf der Basis 15 aufliegen, wenn der Kippmechanismus 16 das darauf positionierte Werkzeugunterteil 8 in die Kipplage K versetzt hat.

Gemäß Figur 6a besitzt die Schwenkeinheit 18 ein mit einem Langloch 38 ausgebildetes Schwenklager 39. Das Schwenklager 39 umfasst eine Hubschiene 39a. Im Langloch 38 des Schwenklagers 39 ist ein Schwenkvorsprung 40 aufgenommen, der beispielsweise als Schwenkstift 41 ausgebildet ist. Der Schwenkstift 41 ist gemäß Figur 6a an einem Bodenteil 42 der Grundplatte 19 befestigt. Der Schwenkstift 41 definiert eine Schwenkachse 41a (siehe Figuren 6b, 6c und 7).

Gemäß Figur 6a ist der Kippmechanismus 16 in einer ersten Stellung S1 eingestellt, in welcher das Werkzeugunterteil 8 für einen Produktionsbetrieb horizontal ausgerichtet ist. Anhand der folgenden Figuren 6b und 6c wird beschrieben, wie der Kippmechanismus 16 aus der ersten Stellung S1 in eine gemäß Figur 6c gezeigte zweite Stellung S2 bewegt werden kann.

Figur 6b zeigt, dass der Griff 32 im Uhrzeigersinn zur Bedienerseite B hinbewegt wird. Dabei schwenkt der Kippteil 27 einschließlich der daran befestigten Hubschiene 34 ebenfalls im Uhrzeigersinn um die Kippachse 28. Der Bolzen 32 wird dadurch innerhalb der Führung 30 von rechts nach links geschoben, wodurch die Grundplatte 19 auf der Seite der Schwenkeinheit 18 zunächst ein wenig angehoben wird. Darauf deutet der Pfeil Z hin. Dieses leichte Anheben der Grundplatte 19 ist auf die Geometrie und die Lage der Führung 30 zurückzuführen und kann durch das Langloch 38 ausgeglichen werden, indem der darin aufgenommene Schwenkstift 41 leicht nach oben angehoben wird. Wird die Kippbewegung fortgeführt, beginnt durch das einwärts Kippen des Kippteils 27 die Grundplatte 19 sich zur Bedienerseite B hin abzusenken. Dabei schwenkt sich die Grundplatte 19 entgegen dem Uhrzeigersinn um die Schwenkachse 41a, die durch den Schwenkstift 41 verläuft.

In Figur 6c ist die Grundplatte 19 in die gemäß Figur 4 gezeigte Schräglage versetzt, in welcher das Werkzeugunterteil 8 in die Kipplage K gebracht ist. Der Kippmechanismus 16 ist dabei in der zweiten Stellung S2 positioniert. In der zweiten Stellung S2 ist der Bolzen 32 bis zu einem zur Bedienerseite B hingewandten Ende 30a der Führung 30 verlagert. Weiter zeigt Figur 6c, dass in der zweiten Stellung S2 des Kippmechanismus 16 die Stützkante 37 des Kippteils 27 auf einer Oberfläche 43 der Basis 15 aufliegt. Des Weiteren verlagert das Kippteil 27 die daran befestigte Hubschiene 34 derart einwärts, dass sie für einen Boden 45 der Grundplatte 19 eine Auflagefläche 44 ausbildet. Somit ist die Grundplatte 19 sowie das darauf angeordnete Werkzeugunterteil 8 stabil in der zweiten Stellung S2 gelagert, sodass das in den Figuren 6a bis 6c nicht gezeigte Werkzeugunterteil 8 stabil für einen Werkzeugwechselvorgang ausgerichtet ist.

Der in den Figuren 6a bis 6c gezeigte Kippmechanismus 16 kann analog auch auf einer gegenüberliegenden, in die Bildebene hineinragenden Seite der Grundplatte 19 ausgebildet sein. Dadurch könnte der Bediener den Kippmechanismus 16 beidhändig bedienen.

Figur 7 zeigt schematisch die Basis 15 des Hubwerks 7, zumindest teilweise die darauf angeordnete Kippeinheit 17 und die der Kippeinheit 17 gegenüberliegende Schwenkeinheit 18, in perspektivischer Darstellung. Figur 7 zeigt, dass die Hubschiene 34 um die Kippachse 28 in die Bildebene der Figur 7 hinein geschwenkt werden kann. Dadurch wird die in Figur 7 nicht gezeigte Grundplatte 19 am Anfang der Schwenkbewegung leicht gemäß einer Höhe H angehoben, was jedoch durch das Langloch 38 an der Schwenkeinheit 18 ausgleichbar ist. Durch das weitere Kippen der Hubschiene 34, was in Produktionsrichtung P betrachtet im Uhrzeigersinn um die Kippachse 28 geschieht, wird die auf der Hubschiene 34 nicht in Figur 7 gezeigte Grundplatte 19 zur Bedienerseite B herabgelassen, wodurch das darauf positionierte Werkzeugunterteil 8 in die gemäß Figur 4 gezeigte Kipplage K verlagert wird.

Die anhand der vorliegenden Erfindung beschriebene Kippmechanik ermöglicht die Verwendung eines Hubwerks 7 mit geringerer Hubweite, sodass die Herstellungskosten der Verpackungsmaschine 1 reduziert werden können. Insbesondere in der ersten Stellung S1 kann der Kippmechanismus 16 große Schließkräfte während des Produktionsbetriebs aufnehmen. Vorstellbar sind Schließkräfte von bis zu 100.000 Newton. Trotzdem kann der erfindungsgemäße Kippmechanismus 16 manuell bedient werden, sodass der Kippmechanismus 16 insgesamt sehr einfach und kostengünstig ausgebildet sein kann. Sämtliche Funktionen sowie Gestaltungsmerkmale der Erfindung gemäß den beschriebenen Figuren 2 bis 7, insbesondere des Hubwerks 7 und des Kippmechanismus 16, können auch an der Siegelstation 4 und/oder der Schneidstation 5 der Verpackungsmaschine 1 zum Einsatz kommen.

Schließlich ist es vorstellbar, den Kippmechanismus 16 derart auszubilden, dass er das Werkzeugunterteil 8 in der Kipplage K zur Bedienerseite B hin oder zu einer der Bedienerseite B gegenüberliegenden Seite hin anhebt, sodass das Werkzeugunterteil 8 oberhalb des Maschinengestells 2 an der Verpackungsmaschine 1 herauszogen werden kann.

## Patentansprüche

1. Verpackungsmaschine (1) zum Herstellen von Produkten entlang einer Produktionsrichtung (P), insbesondere Tiefziehverpackungsmaschine, umfassend ein Maschinengestell (2) und mindestens eine Arbeitsstation (AS), insbesondere eine Siegelstation (4) und/oder eine Formstation (3), mit einem Hubwerk (7) zum Tragen und Bewegen eines Werkzeugunterteils (8) zwischen einer offenen und einer geschlossenen Position (P1, P2), wobei das Werkzeugunterteil (8) in der geschlossenen Position (P1) für einen Arbeitsvorgang an ein darüber angeordnetes Werkzeugoberteil (9) herangeführt und in der offenen Position (P2) von dem Werkzeugoberteil (9) beabstandet ist, **dadurch gekennzeichnet, dass** für einen Werkzeugwechselvorgang ein Kippmechanismus (16) vorgesehen ist, der dazu konfiguriert ist, das Werkzeugunterteil (8) aus seiner in der offenen Position (P1) eingenommenen Ausrichtung heraus in eine Kipplage (K) zu bringen.

2. Verpackungsmaschine nach Anspruch 1 **dadurch gekennzeichnet, dass** der Kippmechanismus (16) integral am Hubwerk (7) der Arbeitsstation (AS) ausgebildet ist.

3. Verpackungsmaschine nach einem der vorigen Ansprüche **dadurch gekennzeichnet, dass** der Kippmechanismus (16) dazu ausgebildet ist, das Werkzeugunterteil (8) innerhalb des Maschinengestells (2) in die Kipplage (K) zu bringen.

4. Verpackungsmaschine nach einem der vorigen Ansprüche **dadurch gekennzeichnet, dass** in der Kipplage (K) eine zu einem Seitenrahmen (13a) des Maschinengestells (2) hingewandte Seite (8a) des Werkzeugunterteils (8) ein niedrigeres Niveau (N1) einnimmt als eine gegenüberliegende zu dem Seitenrahmen (13a) abgewandte Seite (8b) des Werkzeugunterteils (8).

5. Verpackungsmaschine nach einem der vorigen Ansprüche **dadurch gekennzeichnet, dass** der Kippmechanismus (16) zwischen einer ersten und einer zweiten Stellung (S1, S2) einstellbar ist, wobei in der ersten Stellung (S1) des Kippmechanismus (16) das Werkzeugunterteil (8) für einen Produktionsbetrieb horizontal ausgerichtet ist, und wobei in der zweiten Stellung (S2) des Kippmechanismus (16) das Werkzeugunterteil (8) für den Werkzeugwechselvorgang aus der horizontalen Ausrichtung heraus um einen Kippwinkel (α) zu einer Seite des Maschinengestells (2) hin geneigt in der Kipplage (K) gelagert ist.

6. Verpackungsmaschine nach einem der vorigen Ansprüche **dadurch gekennzeichnet, dass** der Kippmechanismus (16) eine Kippeinheit (17) mit einer Hubschiene (34) aufweist, die um eine entlang der Produktionsrichtung (P) verlaufenden Kippachse (28) schwenkbar gelagert ist.

7. Verpackungsmaschine nach einem der vorigen Ansprüche **dadurch gekennzeichnet, dass** der Kippmechanismus (16) eine Schwenkeinheit (18) mit einer als Schwenklager (39) konfigurierten Hubschiene (39a) umfasst, wobei das Schwenklager (39) eine entlang der Produktionsrichtung (P) verlaufende Schwenkachse (41a) definiert, um welche das Werkzeugunterteil (8) in die Kipplage (K) schwenkbar ist.

8. Verpackungsmaschine nach einem der vorigen Ansprüche **dadurch gekennzeichnet, dass** der Kippmechanismus (16) eine zur lösbaren Befestigung des Werkzeugunterteils (8) ausgebildete Grundplatte (19) aufweist, die mittels des Kippmechanismus (16) schwenkbar gelagert ist.

9. Verpackungsmaschine nach einem der vorigen Ansprüche **dadurch gekennzeichnet, dass** der Kippmechanismus (16) mindestens einen Sensor (20) zum Erfassen einer durch das Werkzeugunterteil (8) am Kippmechanismus (16) eingenommenen Endlage (E) umfasst.

10. Verpackungsmaschine nach einem der vorigen Ansprüche **dadurch gekennzeichnet, dass** der Kippmechanismus (16) mindestens einen Sensor (21) zum Erfassen einer vom Kippmechanismus (16) eingenommenen Raststellung (R) umfasst, in welcher das Werkzeugunterteil (8) horizontal ausgerichtet ist.

11. Verpackungsmaschine nach einem der vorigen Ansprüche **dadurch gekennzeichnet, dass** der Kippmechanismus (16) höhenverstellbar ist.

12. Verpackungsmaschine nach einem der vorigen Ansprüche **dadurch gekennzeichnet, dass** das Maschinengestell (2) eine Aufnahme (47) zur lösbaren Befestigung einer Schieneneinrichtung (23) für den Werkzeugwechselvorgang umfasst, um darauf das Werkzeugunterteil (8) aus dem Maschinengestell (2) herausziehen.

13. Verpackungsmaschine nach einem der vorigen Ansprüche **dadurch gekennzeichnet, dass** der Kippmechanismus (16) von einer Bedienerseite (B) der Verpackungsmaschine (1) aus bedienbar ist, um auf der Bedienerseite (B) das Werkzeugunterteil (8) nach unten zu kippen.

## Claims

1. Packaging machine (1) for manufacturing products along a production direction (P), in particular a deep-drawing packaging machine, comprising a machine frame (2) and at least one workstation (AS), in particular a sealing station (4) and/or a shaping station (3), with a lifting gear (7) for supporting and moving a lower tool part (8) between an open and a closed position (P1, P2), wherein the lower tool part (8) is approached, in the closed position (P1), to an upper tool part (9) arranged thereon for a working operation, and is spaced apart from the upper tool part (9) in the open position (P2), **characterized in that** a tilting mechanism (16) is provided for a tool changing operation which is configured to bring the lower tool part (8) from its orientation taken in the open position (P1) to a tilted position (K).

2. Packaging machine according to claim 1, **characterized in that** the tilting mechanism (16) is integrally formed at the lifting gear (7) of the workstation (AS).

3. Packaging machine according to one of the preceding claims, **characterized in that** the tilting mechanism (16) is designed to bring the lower tool part (8) into the tilted position (K) within the machine frame (2).

4. Packaging machine according to one of the preceding claims, **characterized in that** in the tilted position (K), a side (8a) of the lower tool part (8) facing a side frame (13a) of the machine frame (2) takes a lower level (N1) than an opposite side (8b) of the lower tool part (8) facing away from the side frame (13a).

5. Packaging machine according to one of the preceding claims, **characterized in that** the tilting mechanism (16) may be adjusted between a first and a second position (S1, S2), wherein in the first position (S1) of the tilting mechanism (16), the lower tool part (8) is oriented horizontally for a production operation, and wherein in the second position (S2) of the tilting mechanism (16), the lower tool part (8) is held, for the tool changing operation, in the tilted position (K) from the horizontal orientation about a tilting angle (α) inclined to a side of the machine frame (2).

6. Packaging machine according to one of the preceding claims, **characterized in that** the tilting mechanism (16) comprises a tilting unit (17) with a lifting rail (34) which is pivoted about a tilting axis (28) extending along the production direction (P).

7. Packaging machine according to one of the preceding claims, **characterized in that** the tilting mechanism (16) comprises a pivot unit (18) with a lifting rail (39a) configured as a pivot bearing (39), wherein the pivot bearing (39) defines a pivot axis (41a) extending along the production direction (P) about which the lower tool part (8) may be pivoted to the tilted position (K).

8. Packaging machine according to one of the preceding claims, **characterized in that** the tilting mechanism (16) comprises a base plate (19) embodied for releasably fastening the lower tool part (8), the base plate being pivoted by means of the tilting mechanism (16).

9. Packaging machine according to one of the preceding claims, **characterized in that** the tilting mechanism (16) comprises at least one sensor (20) for detecting a stop position (E) taken by the lower tool part (8) at the tilting mechanism (16).

10. Packaging machine according to one of the preceding claims, **characterized in that** the tilting mechanism (16) comprises at least one sensor (21) for detecting a locked position (R) taken by the tilting mechanism (16) in which the lower tool part (8) is oriented horizontally.

11. Packaging machine according to one of the preceding claims, **characterized in that** the tilting mechanism (16) is height adjustable.

12. Packaging machine according to one of the preceding claims, **characterized in that** the machine frame (2) comprises a seat (47) for removably fastening a rail device (23) for the tool changing operation to pull the lower tool part (8) out of the machine frame (2) thereon.

13. Packaging machine according to one of the preceding claims, **characterized in that** the tilting mechanism (16) may be operated from an operator's side (B) of the packaging machine (1) to tilt the lower tool part (8) on the operator's side (B) to the bottom.

## Revendications

1. Machine d'emballage (1) pour la fabrication de produits le long d'une direction de production (P), notamment machine d'emballage par emboutissage et thermoformage, comprenant un bâti de machine (2) et au moins un poste de travail (AS), notamment un poste de scellage (4) et/ou un poste de formage (3), avec un groupe de levage (7) pour supporter et déplacer une partie inférieure d'outillage (8) entre une position d'ouverture et une position de fermeture (P1, P2), la partie inférieure d'outillage (8) étant, pour une opération de travail, dans la position de fermeture (P1), ramenée contre une partie supérieure d'outillage (9) agencée au-dessus, et dans la position d'ouverture (P2), espacée de la partie supérieure d'outillage (9), **caractérisée en ce que** pour une opération de changement d'outillage, il est prévu un mécanisme de basculement (16), qui est configuré pour amener la partie inférieure d'outillage (8) de son orientation prise dans la position d'ouverture (P1), à une position basculée (K).

2. Machine d'emballage selon la revendication 1, **caractérisée en ce que** le mécanisme de basculement (16) est réalisé en intégralité sur le groupe de levage (7) du poste de travail (AS).

3. Machine d'emballage selon l'une des revendications précédentes, **caractérisée en ce que** le mécanisme de basculement (16) est conçu pour amener la partie inférieure d'outillage (8) dans la position basculée (K), à l'intérieur du bâti de machine (2).

4. Machine d'emballage selon l'une des revendications précédentes, **caractérisée en ce que** dans la position basculée (K) un côté (8a) de la partie inférieure d'outillage (8), qui est dirigé vers un cadre latéral (13a) du bâti de machine (2), prend un niveau (N1) plus bas qu'un côté (8b) opposé de la partie inférieure d'outillage (8), qui est plus éloigné dudit cadre latéral (13a).

5. Machine d'emballage selon l'une des revendications précédentes, **caractérisée en ce que** le mécanisme de basculement (16) peut être réglé entre une première et une deuxième position (S1, S2), la partie inférieure d'outillage (8) étant, dans la première position (S1) du mécanisme de basculement (16), orientée horizontalement pour un fonctionnement en mode de production, et la partie inférieure d'outillage (8) étant, dans la deuxième position (S2) du mécanisme de basculement (16), déplacée hors de son orientation horizontale, jusqu'à la position basculée (K) inclinée d'un angle de basculement (α) vers un côté du bâti de machine (2).

6. Machine d'emballage selon l'une des revendications précédentes, **caractérisée en ce que** le mécanisme de basculement (16) comporte une unité de basculement (17) avec une glissière de levage (34), qui est montée pivotante autour d'un axe de basculement (28) s'étendant le long de la direction de production (P).

7. Machine d'emballage selon l'une des revendications précédentes, **caractérisée en ce que** le mécanisme de basculement (16) comporte une unité de pivotement (18) avec une glissière de levage (39a) configurée en tant que palier de pivotement (39), le palier de pivotement (39) définissant un axe de pivotement (41a) s'étendant le long de la direction de production (P) et autour duquel peut pivoter la partie inférieure d'outillage (8) jusque dans la position basculée (K).

8. Machine d'emballage selon l'une des revendications précédentes, **caractérisée en ce que** le mécanisme de basculement (16) comprend une plaque de base (1) conçue pour assurer une fixation démontable de la partie inférieure d'outillage (8) et montée pivotante au moyen du mécanisme de basculement (16).

9. Machine d'emballage selon l'une des revendications précédentes, **caractérisée en ce que** le mécanisme de basculement (16) comprend au moins un capteur (20) pour relever une position finale (E) prise par la partie inférieure d'outillage (8) sur le mécanisme de basculement (16).

10. Machine d'emballage selon l'une des revendications précédentes, **caractérisée en ce que** le mécanisme de basculement (16) comprend au moins un capteur (21) pour relever une position d'encliquetage (R) prise par le mécanisme de basculement (16) et dans laquelle la partie inférieure d'outillage (8) est orientée à l'horizontale.

11. Machine d'emballage selon l'une des revendications précédentes, **caractérisée en ce que** le mécanisme de basculement (16) est réglable en hauteur.

12. Machine d'emballage selon l'une des revendications précédentes, **caractérisée en ce que** le bâti de machine (2) comporte un élément d'accueil (47) pour la fixation amovible d'un système de glissières (23) destiné à l'opération de changement d'outillage, et sur lequel la partie inférieure d'outillage (8) peut être extraite du bâti de machine (2).

13. Machine d'emballage selon l'une des revendications précédentes, **caractérisée en ce que** le mécanisme de basculement (16) peut être manœuvré à partir d'un côté utilisateur de service (B) de la machine d'emballage (1), pour faire basculer la partie inférieure d'outillage (8) vers le bas sur ce côté utilisateur de service (B).
